**Europäisches Patentamt**

**European Patent Office**

**Office européen des brevets**

(11) Veröffentlichungsnummer : **0 035 242 B1**

(12) **EUROPÄISCHE PATENTSCHRIFT**

(45) Veröffentlichungstag der Patentschrift : **15.05.85**

(51) Int. Cl.⁴ : **C 08 F 10/02, C 08 F 4/64**

(21) Anmeldenummer : **81101395.2**

(22) Anmeldetag : **26.02.81**

(54) **Verfahren zur Herstellung von Polymeren und Copolymeren des Ethylens.**

(30) Priorität : **29.02.80 DE 3007725**

(43) Veröffentlichungstag der Anmeldung :
**09.09.81 Patentblatt 81/36**

(45) Bekanntmachung des Hinweises auf die Patenterteilung : **15.05.85 Patentblatt 85/20**

(84) Benannte Vertragsstaaten :
**AT BE DE FR GB IT NL SE**

(56) Entgegenhaltungen :
**DE-A- 1 545 070**
**DE-A- 2 608 863**
**DE-A- 2 608 933**
**ANGEWANDTE CHEMIE, "International Edition in English", Band 15, Heft 10, Oktober 1976, Verlag Chemie WEINHEIM (DE) A. ANDRESEN et al.: "Halogen-Free Soluble Ziegler Catalysts for the Polymerization of Ethylene. Control of Molecular Weight by Choice of Temperature", Seiten 630-632**
**JOURNAL OF POLYMER SCIENCE, POLYMER CHEMISTRY EDITION, Band 14, Heft 8, August 1976, NEW YORK (US) J.C.W. CHIEN et al.: "Supported Catalysts for Stereospecific Polymerization of Propylene", Seiten 1915-1932**
**ANGEWANDTE CHEMIE, Band 92, Heft 5, Mai 1980, WEINHEIM (DE) H. SINN et al.: "Lebende Polymere bei Ziegler-Katalysatoren extremer Produktivität", Seiten 396-402**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Sinn, Hansjörg, Prof. Dr.**
**Hamburger Strasse 37**
**D-2000 Hamburg 76 (DE)**
Erfinder : **Kaminsky, Walter, Prof. Dr.**
**Buschweg 52**
**D-2080 Pinneberg (DE)**
Erfinder : **Vollmer, Hansjürgen, Dr. Chem.**
**Holzmühlenstrasse 78**
**D-2000 Hamburg 70 (DE)**
Erfinder : **Woldt, Rüdinger**
**Am Galgenberg 21**
**D-3140 Lüneburg (DE)**

0 035 242

**Beschreibung**

Die vorliegende Erfindung betrifft ein Verfahren zur Herstellung von Homopolymerisaten des Ethylens und Copolymerisaten des Ethylens mit α-Olefinen durch Polymerisation bei Temperaturen von − 80 bis 150 °C mittels eines halogenfreien Ziegler-Katalysatorsystems aus (1) einem Bis(cyclopentadienyl) übergangsmetalldimethyl und (2) einem Methylalumoxan, wobei das Atomverhältnis Al : Übergangsmetall im Katalysatorsystem bei der Polymerisation im Bereich von 10 : 1 bis $10^8$ : 1 liegt.

Verfahren dieser Gattung sind bekannt, z. B. aus Angew. Chem. *15*, S. 630 bis 632, Int. Ed., oder den DE-A-2 608 863 und 2 608 933. Bei den bekannten Polymerisationsverfahren werden halogenfreie Ziegler-Katalysatorsysteme aus (1) einem Bis(cyclopentadienyl)-titandialkyl oder -zirkondialkyl sowie (2) einem Umsetzungsprodukt von Aluminiumtrialkyl und Wasser oder (2) einem Aluminiumtrialkyl und Wasser verwendet. Mit diesen Katalysatorsystemen können durch Variation der Temperatur und der relativen Wassermenge zwar die Molekulargewichte beeinflußt werden, jedoch liegen die Werte für die Produktivität — bestimmt als das Gewichtsverhältnis von Gesamtausbeute zu eingesetztem Übergangsmetall — nur in einem Bereich von etwa 100 000.

Die Erfindung hat sich die Aufgabe gestellt, ein Verfahren der in Rede stehenden Gattung aufzuzeigen, mit dem insbesondere eine gezielte Molekulargewichtsregelung und eine hohe Produktivität erreicht werden.

Zur Lösung dieser Aufgabe wird ein Verfahren der eingangs definierten Art vorgeschlagen, das dadurch gekennzeichnet ist, daß die Polymerisation mittels eines Katalysatorsystems aus (1) Bis(cyclopentadienyl) zirkondimethyl und (2) einem Methylalumoxan der allgemeinen Formel (R—Al—O)$_m$, in der m eine ganze Zahl von 5 bis 20 ist und R einen Methylrest bedeutet, durchgeführt wird.

Gegenstand der Erfindung ist dementsprechend ein Verfahren zur Herstellung von Homopolymerisaten des Ethylens und Copolymerisaten des Ethylens mit α-Olefinen durch Polymerisation bei Temperaturen von − 80 bis 150 °C mittels eines halogenfreien Ziegler-Katalysatorsystems aus (1) einem Bis(cyclopentadienyl) übergangsmetalldimethyl und (2) einem Methylalumoxan, wobei das Atomverhältnis Al : Übergangsmetall im Katalysatorsystem bei der Polymerisation im Bereich von 10 : 1 bis $10^8$ : 1 liegt, welches dadurch gekennzeichnet ist, daß die Polymerisation mittels eines Katalysatorsystems aus (1) Bis(cyclopentadienyl) zirkondimethyl und (2) einem Methylalumoxan der allgemeinen Formel (R—Al—O)$_m$, in der m eine ganze Zahl von 5 bis 20 ist und R einen Methylrest bedeutet, durchgeführt wird.

Im Rahmen dieses Verfahrens ist es vorteilhaft, wenn die Polymerisation bei einer Al-Konzentration von $10^{-6}$ bis $10^{-2}$ Mol/Liter durchgeführt wird. Vorzugsweise wird die Polymerisation ferner in einem Temperaturbereich zwischen 20 und 150 °C durchgeführt, insbesondere bei 60 °C ± 20 °C.

Bei einer vorteilhaften Ausgestaltung des erfindungsgemäßen Verfahrens werden Ethylen und geringere Mengen an anderen α-Olefinen, wie Buten-1 oder Hexen-1 als Monomere eingesetzt, wobei überraschenderweise die Dichte der erhaltenen Copolymerisats verringert werden kann.

Ebenso kann man vorteilhaft α-ω-Diolefine wie α-ω-Octadien als andere α-Olefine mit Ethylen copolymerisieren, wobei man vernetzte Produkte mit überraschenden Eigenschaften hinsichtlich Dichte und Elastizität erhält.

Überraschenderweise werden bei dem erfindungsgemäßen Verfahren mit dem neuen Katalysatorsystem nicht nur erhöhte Ausbeuten an Polymerisat erhalten, sondern auch weitere Vorteile erzielt. Das Katalysatorsystem ist bereits bei relativ niederen Temperaturen wirksam ; es ermöglicht ferner eine geregelte Beeinflussung der morphologischen Eigenschaften der Polymerisate zur Erzielung einer einheitlichen Korngröße und/oder eines hohen Schüttgewichtes ; es ist einfach und sicher herzustellen und gut handzuhaben, da es sich in inerten Kohlenwasserstoff-Hilfsmedien zubereiten läßt. Letztlich ermöglicht das neue Katalysatorsystem, daß man bei Polymerisationen unter Einwirkung von Molekulargewichtsreglern, wie Wasserstoff, mit relativ geringen Mengen an Regler auskommt, was z. B. für die Thermodynamik der Verfahrensführung von Bedeutung ist.

Beim Arbeiten mit dem neuen Katalysatorsystem ist sowohl ein Wasserzusatz als auch eine — sonst häufig übliche — Aktivierung mit einer Organoaluminiumverbindung nicht erforderlich ; es werden für Polyethylen Produktivitäten von mehr als 100 Millionen (g/g) und Werte für die Aktivitäten — bestimmt als die in 2 Stunden erhaltene Produktivität — von 10 bis 15 Millionen (g/g · 2 h) erreicht.

Die Polymerisationsgeschwindigkeit ist nach geringen Schwankungen in den ersten Minuten konstant, das heißt, daß die Reaktionsansätze über mehrere Stunden mit fast gleichbleibender Geschwindigkeit Monomeres aufnehmen.

Bei höherer Polymerisationstemperatur werden relativ niedrige, bei tiefer Polymerisationstemperatur werden relativ hohe Molekulargewichte erhalten. Sind Ethylen und Propylen gleichzeitig anwesend, so werden Copolymere gebildet.

Die besten Ergebnisse in bezug auf Produktivität werden erhalten, wenn der kryoskopisch bestimmte Oligomerengrad des Methylalumoxans größer als 5, insbesondere größer als 10, ist.

Das erfindungsgemäße Katalysatorsystem ist sowohl für Polymerisation in Lösung als auch für Gasphasenpolymerisation geeignet.

Bei der Lösungspolymerisation geht man beispielsweise so vor, daß das Methylalumoxan in

2

Lösungsmitteln gelöst wird, wobei vorzugsweise $10^{-3}$ bis $10^{-4}$ molare Lösungen verwendet werden, danach werden Temperatur und Monomerdruck eingestellt und durch Zugabe einer Lösung der Zirkonverbindung die Lösung auf $10^{-5}$ bis $10^{-10}$ molar an Zirkon-Verbindung eingestellt.

Für den Fall der Gasphasenpolymerisation stellt man eine Lösung von Methylalumoxan ($10^{-3}$ molar an Al) und Zirkonverbindung ($10^{-6}$ molar an Zr) her und sprüht diese in einen Ethylen enthaltenden Reaktor. Dabei kann der Katalysator auch auf kräftig gerührtes oder gewirbeltes Ethylenpulver aufgetragen werden.

Die Tatsache, daß sowohl das Methylalumoxan als auch das Bis(cyclopentadienyl) zirkondimethyl — Formel : $Cp_2Zr(CH_3)_2$ — fast keinen Dampfdruck haben, ist für die Gasphasenpolymerisation sehr günstig.

Das Methylalumoxan kann auf verschiedene Art und Weise hergestellt werden. Es entsteht, wenn man zu Lösungen von Aluminiumtrimethyl in Benzol oder aliphatischen Kohlenwasserstoffen Wasser in äußerst fein verteilter Form, z. B. feuchtes Lösungsmittel, gibt. Eine bevorzugte Arbeitsweise besteht darin, Aluminiumtrimethyl mit unvollständig entwässertem Kupfersulfat in Berührung zu bringen.

Bei einem besonders bevorzugten Herstellungsverfahren wird fein gepulvertes Kupfersulfat-pentahydrat in Toluol aufgeschlämmt und in einem Glaskolben unter Inertgas bei etwa − 20 °C mit soviel Aluminiumtrimethyl versetzt, daß je 4 Al-Atome etwa 1 Mol $CuSO_4 \cdot 5H_2O$ zur Verfügung stehen. Nach langsamer Hydrolyse unter $CH_2$-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das in Toluol gelöste Methylalumoxan von dem Kupfersulfat abfiltriert und das Toluol unter Vakuum abdestilliert. Es wird angenommen, daß bei diesem Herstellungsverfahren die niedermolekularen Methylalumoxane unter Abspaltung von Aluminiumtrimethyl zu höheren Oligomeren kondensieren.

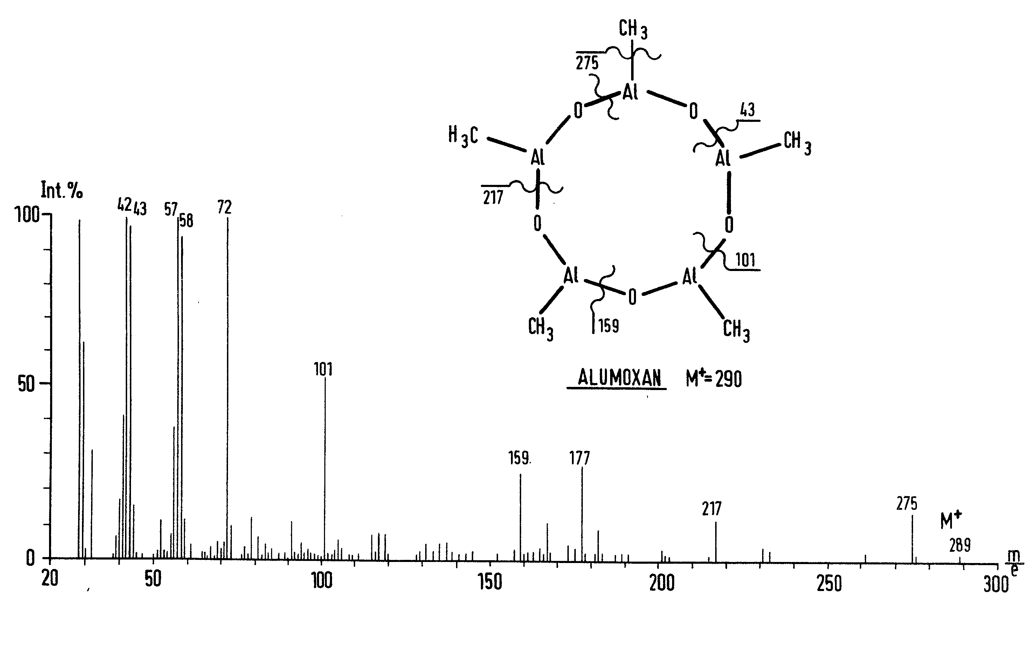

Ein derart hergestelltes und durch fraktionierte Fällung gewonnenes isoliertes Methylalumoxan konnte massenspektrometrisch gemäß Fig. 1 charakterisiert werden.

Im folgenden soll die Erfindung anhand von Beispielen näher erläutert werden :

## Beispiel 1

In einem 1 Liter Glasautoklaven wurden nach Ausheizen und Spülung mit Argon 330 ml Toluol vorgelegt und auf die Versuchstemperatur von 70 °C thermostatisiert. Anschließend wurden 300 mg (5,1 mmol) Aluminiumeinheiten Methylalumoxan zugegeben. Nach kurzer Rührzeit (3 Minuten) wurde eine toluolische Lösung von $(C_5H_5)_2Zr(CH_3)_2$ ($3,33 \cdot 10^{-8}$ mol) zugegeben und nach weiteren 3 Minuten Ethylen bis zu einem Druck von 8 bar aufgepreßt. Ungefähr 120 Sekunden später fiel weißes Polyethylen aus. Nach 1 Stunde wurde der Kontakt durch Zugabe von Methanol zerstört, da das produzierte Polyethylen nicht mehr gerührt werden konnte. Das Polymere wurde filtriert, mehrmals mit Methanol gewaschen und getrocknet. Die Ausbeute betrug 19,0 g. Das mittlere Molekulargewicht wurde viskosimetrisch mit 166.000 bestimmt.

## Beispiel 2

Es wurde analog Beispiel 1 gearbeitet, jedoch mit der Abänderung, daß die toluolische Stammlösung von $(C_5H_5)_2Zr(CH_3)_2$ vor Zugabe stark verdünnt wurde, so daß die Zirkonkonzentration im Reaktionsansatz nur $2,2 \cdot 10^{-10}$ Mol/Liter betrug.

Nach 26 Stunden wurden 15,4 g Polyethylen gebildet, was einer Produktivität von (15,4 g Polyethylen)/($2,2 \cdot 10^{-8}$ g Zirkon) = $700 \cdot 10^6$ entsprach.

## Beispiel 3

Es wurde analog Beispiel 1 gearbeitet, wobei jedoch als Lösungsmittel 190 ml Toluol und als zusätzliches Monomeres 5 ml Hexen-1 in den Autoklaven gefüllt wurden. Die Katalysatormengen für das Alumoxan betrugen 200 mg (3 mmol) und $2 \times 10^{-6}$ mol $ZrCp_2(CH_3)_2$. Nach Aufpressen von 8 bar Ethylen wurde 45 Minuten bei 25 °C polymerisiert. Es wurden 14 g eines Polymerisats mit einer Dichte von 0,94 g/ml erhalten.

## Beispiel 4

Es wurde analog Beispiel 3 gearbeitet, wobei jedoch anstelle von Hexen-1 jetzt 15 ml α-ω-Octadien eingesetzt und die Zirkonkonzentration um den Faktor 10 erniedrigt wurden. Nach einer Polymerisationszeit von einer Stunde wurden 56,6 g vernetztes Polyethylen mit einer Dichte von 0,95 g/ml erhalten.

## Beispiel 5

In einen 1 Liter Glasautoklaven wurden nach Ausheizen und Spülung mit Argon 5 g Polyethylen ($\bar{M}_\eta$ = 131.000) als Rührbett vorgelegt und auf die Versuchstemperatur von 60 °C thermostatisiert.

Anschließend wurden unter Rühren 300 mg (5,1 mmol Al) Methylalumoxanpulver zugegeben. Dann wurde auf 0,5 bar evakuiert und anschließend mit Ethylen auf Normaldruck aufgefüllt. Anschließend wurde eine toluolische Lösung von $Cp_2Zr(CH_3)_2$ ($3,33 \cdot 10^{-6}$ mol) zupipettiert. Danach wurde 5 Minuten evakuiert, um das Toluol wieder abzuziehen, wonach 8 bar Ethylen aufgepreßt wurden. Nach einer Versuchsdauer von 2 Stunden wurden 24,5 g Polyethylen mit einem viskosimetrisch bestimmten mittleren Molekulargewicht von 132.000 erhalten.

## Beispiel 6

Es wurden analog Beispiel 1 verschiedene Ethylen-Polymerisationen mit dem System Bis(cyclopentadienyl) zirkondimethyl und Methylalumoxan in einem 1 l Autoklaven mit 330 ml Toluol als Lösungsmittel bei 8 bar Ethylendruck unter den in der folgenden Tabelle I angegebenen Bedingungen durchgeführt.

### Tabelle I

| Versuch Nr. | $Cp_2Zr(CH_3)_2$ in mol/l | Methylalumoxan mol Al-Einheiten/l | Zeit h | T °C |
|---|---|---|---|---|
| a) | $10^{-7}$ | $6,76 \cdot 10^{-3}$ | 2 | 60 |
| b) | $10^{-7}$ | $1,12 \cdot 10^{-2}$ | 2 | 60 |
| c) | $10^{-7}$ | $1,17 \cdot 10^{-2}$ | 2 | 60 |
| d) | $10^{-8}$ | $6,61 \cdot 10^{-3}$ | 2 | 70 |
| e) | $10^{-8}$ | $1,58 \cdot 10^{-2}$ | 2 | 70 |
| f) | $10^{-7}$ | $9,25 \cdot 10^{-3}$ | 2 | 70 |
| g) | $10^{-7}$ | $1,48 \cdot 10^{-2}$ | 1 | 70 |
| h) | $2,2 \cdot 10^{-10}$ | $1,45 \cdot 10^{-2}$ | 26 | 70 |
| i) | $2,2 \cdot 10^{-10}$ | $1,45 \cdot 10^{-2}$ | 2 | 70 |
| j) | $10^{-7}$ | $1,53 \cdot 10^{-2}$**) | 1 | 70 |
| k) | $10^{-7}$ | $1,53 \cdot 10^{-2}$**) | 0,83 | 70 |

**) Alumoxan höheren Kondensationsgrades

Hierbei wurden die in der folgenden Tabelle II angegebenen Ergebnisse erhalten:

### Tabelle II

| Versuch Nr. | Ausbeute g | Aktivität $\frac{g\ PE}{g\ Zr \cdot 2h}$ | $\overline{M_\eta}$ |
|---|---|---|---|
| a) | 4,2 | $1,4 \cdot 10^6$ | 173.000 |
| b) | 10,0 | $3,7 \cdot 10^6$ | 227.800 |
| c) | 11,7 | $4,3 \cdot 10^6$ | 212.800 |
| d) | 0,9 | $3,0 \cdot 10^6$ | 111.000 |
| e) | 2,7 | $8,9 \cdot 10^6$ | 177.000 |
| f) | 13,3 | $4,4 \cdot 10^6$ | 142.500 |
| g) | 17,7 | $11,6 \cdot 10^{6*)}$ | 142.600 |
| h) | 15,4 | -- | 216.000 |
| i) | 0,56 | ca. $10 \cdot 10^6$ | 216.000 |
| j) | 19,0 | $12,5 \cdot 10^{6*)}$ | 166.000 |
| k) | 18,8 | $14,9 \cdot 10^{6*)}$ | 149.000 |

*) extrapolierter Wert

Bei der Copolymerisation von Ethylen mit α-Olefinen können außer Propylen auch höhere Olefine wie Buten-1, Penten-1 und Hexen-1, aber auch α-ω-Diene wie z. B. α-ω-Octadien insbesondere in geringeren Mengen eingesetzt werden.

**0 035 242**

### Patentanspruch

Verfahren zur Herstellung von Homopolymerisaten des Ethylens und Copolymerisaten des Ethylens mit α-Olefinen durch Polymerisation bei Temperaturen von − 80 bis 150 °C mittels eines halogenfreien Ziegler-Katalysatorsystems aus (1) einem Bis(cyclopentadienyl) übergangsmetalldimethyl und (2) einem Methylalumoxan, wobei das Atomverhältnis Al : Übergangsmetall im Katalysatorsystem bei der Polymerisation im Bereich von 10 : 1 bis $10^8$ : 1 liegt, dadurch gekennzeichnet, daß die Polymerisation mittels eines Katalysatorsystems aus (1) Bis(cyclopentadienyl) zirkondimethyl und (2) einem Methylalumoxan der allgemeinen Formel $(R{-}Al{-}O)_m$, in der m eine ganze Zahl von 5 bis 20 ist und R einen Methylrest bedeutet, durchgeführt wird.

### Claim

A process for preparing homopolymers of ethylene and copolymers of ethylene and α-olefins by polymerizing the monomer(s) at a temperature of from − 80 to 150 °C in the presence of a halogen-free Ziegler catalyst system consisting of (1) a bis(cyclopentadienyl)-transition metal dimethyl and (2) a methyl alumoxan, the atomic ratio of Al to transition metal in the catalyst system being from 10 : 1 to $10^8$ : 1 during the polymerization, wherein the polymerization is carried out in the presence of a catalyst system consisting of (1) bis(cyclopentadienyl)-zirconium dimethyl and (2) a methyl alumoxan of the general formula $(R{-}Al{-}O)_m$, where is an integer from 5 to 20 and R is methyl.

### Revendication

Procédé de préparation d'homopolymères de l'éthylène et de copolymères de l'éthylène et d'α-oléfines par polymérisation à des températures de − 80 à 150 °C en présence d'un système catalytique selon Ziegler exempt d'halogène, formé de (1) un dérivé bis-(cyclopentadiényl)-diméthylique d'un métal de transition et de (2) un méthyl-alumoxane, le rapport atomique Al : métal de transition dans le système catalytique étant compris, lors de la polymérisation, dans la gamme de 10 : 1 à $10^8$ : 1, caractérisé en ce que la polymérisation est réalisée en présence d'un système catalytique composé de (1) du bis-(cyclopentadiényl)-zirconio-diméthyle et de (2) un méthyl-alumoxane de la formule générale $(R{-}Al{-}O)_m$, dans laquelle R désigne un radical méthyle et m est un nombre entier valant de 5 à 20.

5

Int.%

100 —

50 —

0 —

42 43  57 58  72

101

159.  177

217

275

M+
289

20    50    100    150    200    250    300

m/e

CH₃

$\overline{275}$

Al

O         O    43

H₃C        Al              Al    CH₃

217

O                    O

101

Al         O    Al

CH₃      159      CH₃

ALUMOXAN    M⁺= 290

0 035 242